# EUROPÄISCHE PATENTANMELDUNG

(11) **EP 1 743 519 A1**
(43) Veröffentlichungstag der Anmeldung: **17.01.2007**
(21) Anmeldenummer: 06014118.1
(22) Anmeldetag: 07.07.2006
(51) Int. Cl.: A01K 5/00

(54) **Futtervorrichtung für Pferde**

(30) Priorität: 13.07.2005 DE 202005011187 U
(71) Anmelder: Ernst, Dieter, 33184 Altenbeken (DE)
(72) Erfinder: Ernst, Dieter, 33184 Altenbeken (DE)
(74) Vertreter: Ostermann, Thomas

(57) **Zusammenfassung**

Die Erfindung betrifft eine Futtervorrichtung für Pferde mit mindestens einer Putterausgabe, die einem Fressplatz zugeordnet ist, mit mindestens einem Futterspeicher, mit Stellmitteln zum Verbringen des Futters aus dem Futterspeicher zu der Futterausgabe, wobei die Stellmittel eine verschwenkbare Bodenfläche und ein der Bodenfläche zugeordnetes Entriegelungselement umfassen, derart, dass bei Auslösen des Entriegeluzagselementes die Bodenfläche verschwenkt wird und das Futter von dem Futterspeicher zu der Futterausgabe geführt wird.

## Beschreibung

Die Erfindung betrifft eine Futtervorrichtung für Pferde mit mindestens einer Futterausgabe, der einem Fressplatz zugeordnet ist, mit mindestens einem Futterspeicher, mit Stellmitteln zum Verbringen des Futters aus dem Futterspeicher zu der Futterausgabe.

Aus der DE 200 14 838 U1 ist eine Futtervorrichtung für Pferde bekannt, die eine Futterausgabe für Kraftfutter und eine Futterausgabe für Raufutter aufweist. Die Futtervorrichtung weist mehrere Futterausgaben für Raufutter auf, die nebeneinander liegend durch Trennwände getrennt angeordnet sind. Damit den Pferden auch die Möglichkeit gegeben wird, Kraftfutter zu erhalten, wird die gesamte Vorrichtung mittels Stellmitteln um 90° um eine horizontale Achse verschwenkt, so dass eine Futterausgabe für Kraftfutter an demselben Fressplatz bereitgestellt wird. Nach Zurückverschwenken der Vorrichtung um 90° um die horizontale Achse steht wieder die Futterausgabe für Raufutter zur Verfügung. Eine gezielte Nachführung für das Raufutter ist nicht vorgesehen, so dass in einem ungünstigen Fall, in dem das Raufutter bei der zurückschwenkbewegung nicht gegen das Fressgitter fällt, die Pferde lediglich in den Genuss von zwei Fütterungen kommen.

Aufgabe der vorliegenden Erfindung ist es, eine Futtervorrichtung für Tiere derart weiterzubilden, dass eine Mehrzahl von Fütterungen zu bestimmten Zeiten Platz sparend erfolgen kann.

Zur Lösung dieser Aufgabe ist die Erfindung in Verbindung mit dem Oberbegriff des Patentanspruchs 1 dadurch gekennzeichnet, dass die Stellmittel eine verschwenkbare Bodenfläche und ein der Bodenfläche zugeordnetes Entriegelungselement umfassen, derart, dass bei Auslösen des Entriegelungselementes die Bodenfläche verschwenkt wird und das Futter von dem Futterspeicher zu der Futterausgabe geführt wird.

Der besondere Vorteil der Erfindung besteht darin, dass Platz sparend eine fest vorgegebene Anzahl von Fütterungen in einem vorgegebenen Zeitraum erfolgen kann, wobei die Portionierung des Futters stets vorgebbar ist. Grundgedanke der Erfindung ist es, eine Mehrzahl von übereinander angeordneten Futterspeichern vorzusehen, die nacheinander, und zwar von unten aufsteigend betätigt werden. Damit kann das Futter in frei einstellbaren Zeitabständen nacheinander durch das Eigengewicht nach unten zu der Fressausgabe fallen. Vorteilhaft ergibt sich somit eine kompakte und robuste Futtervorrichtung.

Nach der Erfindung bildet ein Teil des Futterspeichers, nämlich die Bodenfläche des Futterspeichers, ein Stellmittel, das zur Freigabe des Futterspeichers eingesetzt wird.

Die Bodenfläche klappt bei Auslösen eines Entriegelungselementes durch das Eigengewicht nach unten und gibt somit den Weg frei für das Futter. Der Bodenfläche kommt damit eine Doppelfunktion zu.

Nach einer bevorzugten Ausführungsform der Erfindung umfassen die Entriegelungsmittel eine Steuereinheit, die auf ein als elektrisch betätigbarer Schalter ausgebildetes Entriegelungselement einwirkt . Die Schalteinheit kann vorzugsweise einen Mikrokontroller mit einer speicherprogrammierbaren Steuerung enthalten, so dass bedienungsfreundlich bestimmte Fütterungszeiten eingegeben werden können.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: eine perspektivische Darstellung einer Futtervorrichtung von einer ersten Schmalseite her gesehen und
- Figur 2: eine perspektivische Darstellung der Futtervorrichtung von einer gegenüberliegenden Seite her gesehen.

Eine Futtervorrichtung 1 für Pferde wird vorzugsweise in einem überdachten Außenbereich, auf einer Pferdekoppel, eingesetzt. Alternativ kann die Futtervorrichtung 1 auch in Pferdeställen oder für andere Tierarten verwendet werden.

Die Futtervorrichtung 1 besteht im Wesentlichen aus einem quaderförmigen Gehäuse 2, in dem im Wesentlichen eine erste vertikale Reihe 3 von Futterspeichern 4 für ein erstes Futter 5 und eine in horizontaler Richtung versetztezweite Reihe 6 von Futterspeichern 7 für ein zweites Futter 8 umfasst. Die Futterspeicher 4 sind relativ groß ausgebildet und dienen zur Aufnahme von Raufutter 5. Die Futterspeicher 7 sind relativ klein ausgebildet und dienen zur Aufnahme von Kraftfutter 8.

Den Reihen 3, 6 von Futterspeichern 4, 7 ist jeweils eine Futterausgabe 9 bzw. 10 zugeordnet. Die Futterausgabe 9 für Raufutter 5 ist begrenzt durch ein Fressgitter 11 mit einer Mehrzahl von vertikal verlaufenden Stäben. Die Futterausgabe 9 ist unterhalb der Futterspeicher 4 angeordnet.

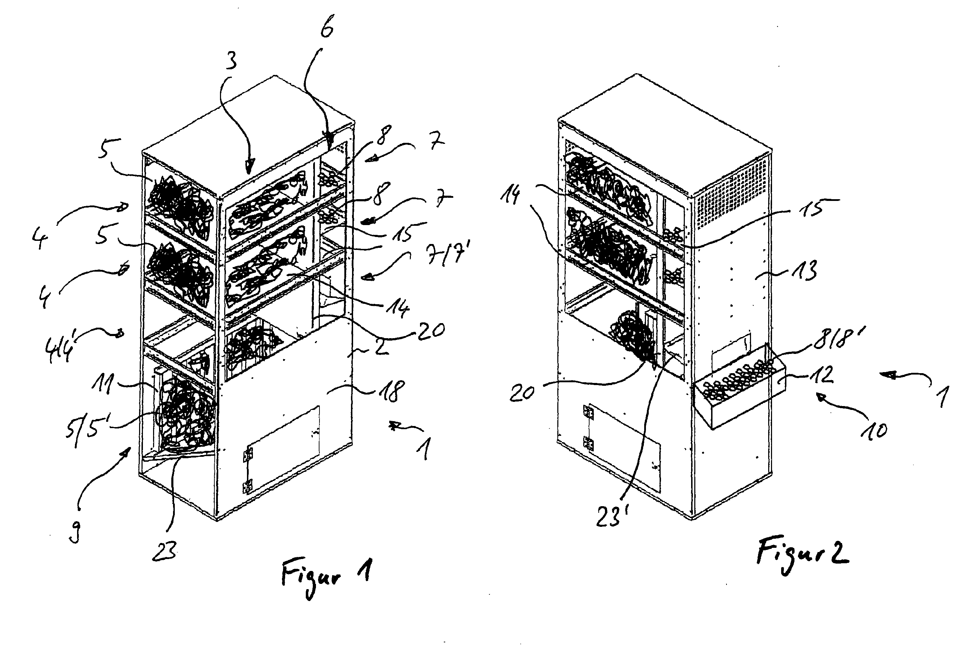

Die Futterausgabe 10 der zweiten vertikalen Reihe 6 zur Ausgabe von Kraftfutter 8 umfasst einen Futtertrog 12, der an einer vertikalen Schmalseite 13 der Futtervorrichtung 1 angeordnet ist. Der Futtertrog 12 ist unterhalb des Niveaus eines untersten Futterspeichers 7' angeordnet. In einer Ausgangsstellung der Futtervorrichtung 1 kann der Futtertrog 12 sowie die Futterausgabe 9 mit dem entsprechenden Futter 5, 8 befüllt sein. Nach einer vorgegebenen Zeitspanne werden die untersten Futterspeicher 4', 7' derart beaufschlagt, dass das von denselben getragene Futter 5', 8' zu der Futterausgabe 9, 10 hinunterfällt. Hierzu ist eine Bodenfläche 14, 15 der Futterspeicher 4, 4' bzw. 7, 7' schwenkbar gelagert. An einer ersten Längsseite der Bodenflächen 14, 15 sind dieselben über ein Scharnier an einer vertikalen Gehäusewand 18 bzw. Schmalseite 13 gelagert. An einer inneren Schmalseite 20 sind die Bodenflächen 14, 15 in der Ausgangsstellung horizontal über ein jeweils denselben zugeordnetes Entriegelungselement gehalten. Das Entriegelungselement erstreckt sich vorzugsweise nach innen abragend von der Gehäusewand, so dass die Schmalseite 20 in der Ausgangsstellung auf dem Entriegelungselement aufliegt. Das Entriegelungselement ist als elektrisch betätigbarer Schalter ausgebildet, das bei Auslösen der Entriegelung wie ein "Türöffner" zurückfährt und die Bodenfläche 14, 15 zum Verschwenken nach unten durch das Eigengewicht freigibt. Die Bodenflächen 14, 15 bewegen sich damit wie eine Falltür nach unten in eine vertikale Lage bzw. Schräglage, wie es aus Figur 1 ersichtlich ist, in der das Futter 5, 5', 8, 8' den Futterausgaben 9, 10 selbsttätig zugeführt werden kann. Die Futterausgabe 9 umfasst eine schräge Platte 23, so dass das Raufutter 5' in Richtung des Fressgitters 11 fallen kann. Die Futterausgabe 10 umfasst eine schräge Platte 23', so dass das Kraftfutter 8' in den Futtertrog 12 fallen kann.

Zur Betätigung des Entriegelungselementes ist als weiteres Stellmittel eine nicht dargestellte Steuereinheit vorgesehen, die vorzugsweise einen Mikrokontroller mit einer speicherprogrammierbaren Steuerung umfasst. Zu programmierbaren Fütterungszeiten werden dann die zu den Bodenflächen 14, 15 korrespondierenden Entriegelungselemente betätigt, so dass nacheinander die Bodenfläche 14, 15 des untersten Futterspeichers 4', 7', dann die Bodenfläche 14, 15 des nächst höheren Futterspeichers 4, 7 ausgelöst wird.

Im vorliegenden Ausführungsbeispiel weisen die vertikalen Reihen 3, 6 jeweils 3 betätigbare Futterspeicher 4, 7 mit verschwenkbaren Bodenflächen 14, 15 auf. Somit können nach Befüllung der Futtervorrichtung 1 mit Futter insgesamt vier Fütterungen mit Raufutter 5, 5' und vier Fütterungen mit Kraftfutter 7, 7' erfolgen, wobei die jeweils letzten drei Fütterungen zeitlich voreinstellbar sind. Die erste Fütterung erfolgt bereits mit Befüllen der Futtervorrichtung 1, indem der Futtertrog 12 befüllt und der Raum unterhalb der Bodenfläche 14 des untersten Futterspeichers 4' befüllt wird.

Nach einer nicht dargestellten Ausführungsform der Erfindung können die Bodenflächen 14, 15 auch geteilt ausgebildet sein.

## Patentansprüche

1. Futtervorrichtung (1) für Pferde mit mindestens einer Futterausgabe (9, 10), die einem Fressplatz zugeordnet ist, mit mindestens einem Futterspeicher (4, 4', 7, 7'), mit Stellmitteln zum Verbringen des Futters aus dem Futterspeicher (4, 4', 7, 7') zu der Futterausgabe (9, 10), **dadurch gekennzeichnet, dass** die Stellmittel eine verschwenkbare Bodenfläche (14, 15) und ein der Bodenfläche (14, 15) zugeordnetes Entriegelungselement umfassen, derart, dass bei Auslösen des Entriegelungselementes die Bodenfläche (14, 15) verschwenkt wird und das Futter (5, 5', 8, 8') von dem Futterspeicher (4, 4', 7, 7') zu der Futterausgabe (9, 10) geführt wird.

2. Futtervorrichtung nach Anspruch 1, **dadurch gekennzeichnet, dass** durch Betätigen des Entriegelungselementes die Bodenfläche (14, 15) der Futterspeicher (4, 4' , 7, 7') durch Eigengewicht aus einer horizontalen Position in eine im Wesentlichen vertikale Position verschwenkbar ist.

3. Futtervorrichtung nach Anspruch 1 oder 2, **dadurch gekennzeichnet, dass** eine Mehrzahl von Futterspeichern (4, 4', 7, 7') übereinander und/oder nebeneinander angeordnet sind und dass die Stellmittel eine Steuereinheit umfassen, die nach einer zeitlichen Vorgabe nacheinander das Entriegelungselement der Bodenflächen (14, 15) des untersten Futterspeichers (4, 4', 7, 7') und die Entriegelungselemente der weiteren Bodenflächen (14, 15) der nächst höheren Futterspeicher (4, 4', 7, 7') betätigt.

4. Futtervorrichtung nach einem der Ansprüche 1 bis 3, **dadurch gekennzeichnet, dass** unterhalb des untersten. Futterspeichers (4') die Futterausgabe (9) angeordnet ist.

5. Futtervorrichtung nach einem der Ansprüche 1 bis 4, **dadurch gekennzeichnet, dass** eine erste vertikale Reihe (3) von Futterspeichern (4, 4') für ein erstes Futter (5, 5') und mindestens eine weitere zweite vertikale Reihe (6) von Futterspeichern (7, 7') für ein zweites Futter (8, 8') vorgesehen sind.

6. Futtervorrichtung nach einem der Ansprüche 1 bis 5, **dadurch gekennzeichnet, dass** das Entriegelungselement als ein elektrisch gesteuerter Schalter ausgebildet ist,

7. Futtervorrichtung nach einem der Ansprüche 1 bis 6, **dadurch gekennzeichnet, dass** die Steuereinheit einen Mikrokontroller und/oder einen Mikroprozessor mit einer speicherprogrammierbaren Steuerung umfasst.

8. Futtervorrichtung nach einem der Ansprüche 1 bis 7, **dadurch gekennzeichnet, dass** die Futterspeicher (4, 4', 7, 7') in einem Gehäuse (2) untergebracht sind.

9. Futtervorrichtung nach einem der Ansprüche 1 bis 8, **dadurch gekennzeichnet, dass** eine erste Futterausgabe (9) mit einem Fressgitter (11) zur Ausgabe von Raufutter (5, 5') und eine zweite Futterausgabe (10) mit einem Futtertrog (12) zur Ausgabe von Kraftfutter (8, 8') vorgesehen ist.

10. Futtervorrichtung nach einem der Ansprüche 1 bis 9, **dadurch gekennzeichnet, dass** die Bodenfläche (14, 15) über ein Scharnier an dem Gehäuse (2) schwenkbar gelagert ist.
